# FASCICULE DE BREVET EUROPEEN

(11) **EP 3 585 510 B1**
(45) Date de publication et mention de la délivrance du brevet: **27.04.2022**
(21) Numéro de dépôt: 18706517.2
(22) Date de dépôt: 22.02.2018
(51) Int. Cl.: B01J 8/18, B01J 8/08, B01J 8/24, B01J 4/00, B01J 19/02, B01J 8/44

(54) **ELEMENT D'INJECTION DE GAZ POUR UNITE DE CRAQUAGE CATALYTIQUE FLUIDE ET SYSTEME DE DISTRIBUTION DE GAZ EQUIPE DE CET ELEMENT D'INJECTION**
GASINJEKTIONSELEMENT FÜR EINE FLUID-CATALYTIC-CRACKING-EINHEIT UND MIT DIESEM GASINJEKTIONSELEMENT AUSGESTATTETES GASVERTEILUNGSSYSTEM
GAS INJECTION ELEMENT FOR A FLUID CATALYTIC CRACKING UNIT AND GAS DISTRIBUTION SYSTEM EQUIPPED WITH THIS INJECTION ELEMENT

(30) Priorité: 27.02.2017 FR 1751530
(43) Date de publication de la demande: 01.01.2020
(73) Titulaire: TotalEnergies Raffinage Chimie, 92400 Courbevoie (FR)
(72) Inventeur: LESAGE, Romain, 2000 Antwerpen (BE)
(74) Mandataire: Kerneur, Youen
(86) Numéro de dépôt international: PCT/EP2018/054441
(87) Numéro de publication internationale: WO 2018/154019

(56) Documents cités:
- WO-A1-2016/016088
- WO-A1-2016/016094
- US-A1- 2012 138 698
- US-B1- 6 503 461

## Description

L'invention concerne l'injection de gaz, notamment l'injection d'air ou de vapeur dans une unité de craquage catalytique fluide ou FCC (de l'anglais « Fluid Catalytic Cracking »). L'invention concerne ainsi un élément d'injection de gaz et un système de distribution de gaz équipé d'un ou plusieurs éléments d'injection de gaz.

Dans une unité FCC, les systèmes d'injection d'air (grille d'air, anneau d'air, « pipe grid » -grille- du régénérateur) ou d'injection de vapeur (notamment pour les opérations de strippage) sont généralement munis de buses d'injections permettant de contrôler la répartition du débit de gaz et la vitesse d'éjection. Ces éléments sont soumis à l'érosion par le catalyseur circulant dans l'unité FCC. Il arrive en effet que le catalyseur pénètre à l'intérieur des buses, soit par un phénomène dit de « veina contracta », par aspiration du catalyseur par effet venturi du jet de fluide sortant de la buse, soit suite à un pleurage du catalyseur à l'intérieur de la buse, par exemple dans le cas d'un fonctionnement à faible débit. Le catalyseur rentré dans la buse d'injection en est expulsé par le jet de fluide, provoquant une érosion de la buse.

Afin de limiter ces phénomènes d'érosion, plusieurs solutions ont été envisagées. Une solution consiste à réaliser les buses entièrement en céramique. De telles buses sont néanmoins fragiles. Une autre solution consiste à réaliser une buse en métal recouverte d'une couche de matériau dur, par exemple de la stellite. De telles buses présentent une bonne résistance à l'érosion mais finissent car devoir être remplacées.

WO2016/016094 A1 divulgue un élément d'injection de gaz, comprenant un élément interne en matériau céramique et un fourreau métallique de formes complémentaires et pourvues d'éléments pour fixer de manière réversible le fourreau et l'élément interne.

Ainsi, la maintenance de ces systèmes de distribution nécessite encore le remplacement d'un nombre important de buses à chaque arrêt (environ 20% des buses, ce qui correspond à plus de 200 buses pour ce type d'unités). Le remplacement des buses est relativement long, les buses devant être dessoudées une à une. Aussi, régulièrement, le nombre de buses à remplacer est tel que le remplacement du système de distribution complet est anticipé afin de raccourcir les travaux de maintenance.

Il existe donc un besoin pour limiter et réduire la maintenance des systèmes d'injection de gaz soumis à une érosion.

A cet effet, l'objet de l'invention concerne un élément d'injection de gaz pour un système de distribution de gaz à l'intérieur d'une enceinte d'une unité de craquage catalytique fluide, ledit élément d'injection comprenant un passage le traversant de part en part,
caractérisé en ce qu'il comprend :
- un élément interne en matériau céramique dont une surface interne définit ledit passage traversant sur toute sa longueur,
- un fourreau métallique creux, à l'intérieur duquel est logée au moins une partie de l'élément interne,
le fourreau et l'élément interne présentant respectivement une surface interne et une surface externe de formes complémentaires autorisant un déplacement de l'élément interne par rapport au fourreau suivant une direction parallèle à un axe du passage traversant, lesdites surfaces interne du fourreau et externe de l'élément interne étant pourvues d'éléments de fixation coopérant pour fixer de manière réversible le fourreau et l'élément interne.

Autrement dit, les éléments de fixation assurent une fixation non définitive (démontable) entre le fourreau et l'élément interne. Ceci permet de changer aisément l'élément interne définissant le passage traversant, permettant de changer rapidement ce dernier en cas d'usure. L'élément interne est logé à l'intérieur du fourreau : une surface interne du fourreau est alors en regard d'une surface externe de l'élément interne. Notamment, la surface externe de l'élément interne est opposée à la surface interne qui définit le passage traversant. On comprend ainsi que ces surfaces (surfaces interne et externe de l'élément interne et surface interne du fourreau) sont parallèles à l'axe du passage traversant.

Avantageusement, la surface externe de l'élément interne et la surface interne du fourreau peuvent être des surfaces de révolution, notamment cylindriques, présentant un axe de révolution confondu ou parallèle à un axe du passage traversant. Ceci permet de faciliter la réalisation du fourreau et de l'élément interne et de simplifier la conception des éléments de fixation.

Les éléments de fixation peuvent alors comprendre des ergots ou des encoches coopérant respectivement avec des rainures ou nervures de forme adaptée pour permettre de déplacer le fourreau et l'élément interne entre un état de fixation et un état libéré suite à des mouvements de translation suivant une direction parallèle à l'axe de révolution et de rotation autour de l'axe de révolution.

La fixation du fourreau et de l'élément interne et leur démontage peuvent ainsi être réalisés de manière très simple par des mouvements successifs de translation et rotation, respectivement de rotation et translation. Notamment le passage d'un état à un autre peut être obtenu en déplacement uniquement l'élément interne par rapport au fourreau, par des mouvements successifs de translation et de rotation. Dans sa conception la plus simple, ce type de fixation peut alors être similaire à une fixation de type baïonnette ou quart de tour.

Le fourreau peut avantageusement être de forme cylindrique permettant de le réaliser de manière très simple.

Avantageusement, l'élément interne peut présenter à une de ses extrémités une collerette en appui dans l'état de fixation contre une extrémité du fourreau suivant la direction de l'axe du passage traversant. Cette collerette forme ainsi une butée pouvant améliorer le maintient des pièces. Avantageusement, elle s'étend perpendiculairement à l'axe du passage traversant, depuis la surface externe du fourreau.

Le fourreau est en matériau métallique, par exemple un métal ou un alliage, de préférence un acier inoxydable.

Le matériau céramique de l'élément interne peut être choisi parmi le carbure de silicium SiC, le carbure de bore B₄C, le nitrure de silicium Si₃N₄, le nitrure d'aluminium AIN, le nitrure de bore BN, l'alumine Al₂O₃, ou des mélanges de ceux-ci.

Avantageusement, le matériau céramique est du carbure de silicium SiC ou comprend du carbure de silicium SiC, de préférence en quantité majoritaire, par exemple en une teneur de 60% à 99,9% en poids. Le carbure de silicium présente l'avantage de posséder de bonnes propriétés mécaniques et physiques pour un coût de fabrication raisonnable.

En variante ou éventuellement en combinaison, le matériau céramique peut comprendre une matrice céramique choisie parmi le carbure de silicium SiC, le carbure de bore B₄C, le nitrure de silicium Si₃N₄, le nitrure d'aluminium AIN, le nitrure de bore BN, l'alumine Al₂O₃, ou des mélanges de ceux-ci, matrice céramique dans laquelle sont incorporées des fibres, par exemple des fibres de carbone ou des fibres céramiques, ou des mélanges de celles-ci.

Le matériau céramique est alors un matériau composite. Un tel matériau composite peut être avantageux pour les injecteurs soumis à des contraintes d'étirement et de cisaillement. Notamment, les fibres peuvent être disposées de manière aléatoire (pseudo-isotrope) ou anisotropique. Une distribution anisotropique des fibres peut être avantageuse dans des zones particulières, par exemple les zones d'extrémité destinées à être assemblées avec un autre matériau ou avec une autre pièce ou dans le cas de zones soumises à une contrainte d'étirement/cisaillement importante. Lorsqu'elles sont présentes, ces fibres peuvent représenter de 0,1 à 10% en poids du matériau composite.

Les fibres de carbone peuvent être des fibres de carbone avec les plans graphitiques orientés le long de la fibre.

Les fibres céramiques peuvent être choisies parmi les fibres d'alumine cristalline, les fibres de mullite (3Al₂O₃, 2SiO₂), les fibres de carbure de silicium cristallin ou amorphe, des fibres de zircone, des fibres de silice-alumine, ou des mélanges de celles-ci.

De préférence, le matériau céramique composite comprend une matrice en carbure de silicium SiC, comprenant des fibres du type précité. De préférence, les fibres sont des fibres en carbure de silicium.

Avantageusement et de manière non limitative, le matériau céramique peut être un matériau céramique fritté. Ceci peut notamment faciliter la réalisation de l'élément interne.

Dans ce cas, l'élément interne peut être formé par exemple par moulage ou par extrusion, suivi par une cuisson, dans des conditions opératoires conventionnelles adaptées au type de céramique produit. L'étape de cuisson est éventuellement précédée d'une étape de séchage.

Avantageusement, les parois internes de l'élément interne peuvent être lisses, autrement dit, elles peuvent présenter une faible rugosité de surface. De telles parois lisses peuvent permettre d'augmenter les vitesses en service à l'intérieur de l'élément interne.

Une telle paroi lisse peut être obtenue lorsque le matériau céramique est un matériau céramique fritté.

Avantageusement et de façon non limitative, l'élément interne peut être obtenu à partir d'une poudre de frittage relativement fine, par exemple avec un diamètre moyen de grains inférieur ou égal à 500 nm, ce qui peut conduire à des surfaces relativement lisses.

Alternativement ou en complément, l'élément interne peut être obtenu en ajoutant au matériau principal, par exemple du SiC, un additif, choisi parmi le bore B, le silicium Si et le carbone C, ou leurs mélanges, par exemple dans une proportion variant de 0,3% à 2% en poids. Dans le cas d'un matériau SiC obtenu par frittage de poudre, un tel ajout d'additif peut permettre de diminuer la porosité et par conséquent la rugosité.

Avantageusement et de façon non limitative, l'additif peut comprendre un mélange de bore B, de silicium Si et de carbone C. Il peut ainsi se former du SiC additionnel, lequel vient boucher les pores et diminuer ainsi la rugosité.

Alternativement ou en complément, on pourra par exemple prévoir une étape de dépôt additionnel de SiC par dépôt chimique en phase vapeur ou CVD (de l'anglais « Chemical Vapor Déposition »).

L'invention concerne également un système de distribution de gaz à l'intérieur d'une enceinte d'une unité de craquage catalytique fluide, ledit système de distribution comprenant une paroi support percée d'au moins un orifice et définissant au moins une partie d'une cavité, la paroi support ayant une première face destinée à être en contact avec un gaz contenu dans cette cavité, et une deuxième face, opposée à la première face.

A titre d'exemple, cette paroi support peut être une grille, un plateau percé ou définir un tube, notamment un tube courbé et fermé sur lui-même à la manière d'un tore ou encore définir plusieurs tubes s'entrecroisant (« pipe grid » ou rateau d'air).

Selon l'invention, le système de distribution comprend au moins un élément d'injection tel que décrit précédemment, l'élément d'injection étant solidarisé à la paroi support, au niveau de l'orifice, de sorte que du gaz issu de la cavité puisse circuler au travers de la paroi support vers la deuxième face de celle-ci via le passage de l'élément interne solidarisé au fourreau, seul le fourreau étant solidarisé à la paroi support.

On comprend ainsi que l'élément interne peut être facilement démonté, sans avoir à désolidariser le fourreau de la paroi support, dans la mesure où il est uniquement fixé au fourreau. Ceci permet de réduire le temps nécessaire au changement de l'élément interne.

Avantageusement, le fourreau peut être solidarisé à la paroi support par une extrémité, notamment de sorte à ne pas saillir de la deuxième face de ladite paroi support.

En variante ou en combinaison, le fourreau peut être solidarisé à la paroi support par une extrémité, notamment insérée dans l'orifice.

Avantageusement, dans l'état de fixation, l'élément interne peut traverser ledit orifice et présenter à une de ses extrémités une collerette en appui contre une extrémité du fourreau. Ceci peut faciliter la mise en place de l'élément interne.

Une extrémité du fourreau insérée dans l'orifice peut alors être en appui contre la collerette dudit élément interne.

L'invention est maintenant décrite en référence aux dessins annexés, non limitatifs, dans lesquels :
- la figure 1 illustre une représentation schématique partielle en coupe d'une enceinte comprenant un système de distribution de gaz selon un mode de réalisation ;
- la figure 2 illustre une représentation schématique partielle en coupe d'un élément d'injection selon un mode de réalisation ;
- la figure 3 représente une vue en coupe de la figure 2 selon la ligne A-A.

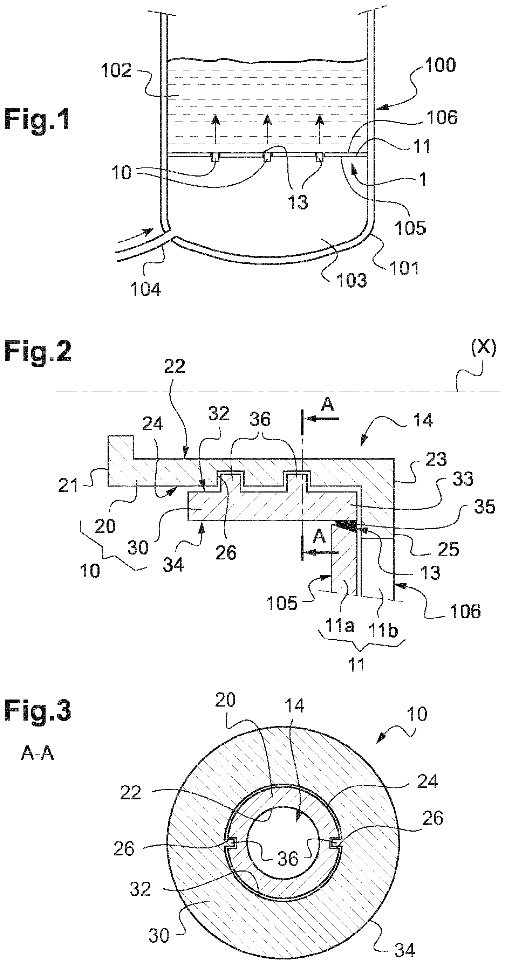

La figure 1 représente partiellement une enceinte 100 faisant partie d'une unité de craquage catalytique fluide FCC non représentée dans son intégralité. L'enceinte représentée est ici une enceinte d'un régénérateur, dans lequel s'effectue la combustion de coke déposé sur du catalyseur issu d'un réacteur de l'unité FCC (non représenté).

Le catalyseur dans l'enceinte 100 forme un lit fluidisé 102.

Un système de distribution 1 permet d'injecter de l'air dans ce lit catalytique fluidisé 102, et donc de l'oxygène nécessaire à la combustion du coke.

Ce système de distribution 1 comprend une paroi support, ici un plateau perforé 11, occupant la totalité d'une section de l'enceinte 100, et supportant le lit fluidisé 102. Ce plateau définit ainsi avec les parois de fond de l'enceinte une cavité d'air 103. Un conduit 104 débouchant sur cette cavité 103 permet de fournir de l'air sous pression.

Le plateau comprend ainsi une première face 105 en contact avec l'air de la cavité 103 et une deuxième face 106 en contact avec le lit fluidisé 102.

Le plateau perforé 11 est ici une plaque 11a en acier. Il peut présenter un revêtement réfractaire 11b en matériau composite (représenté figure 2) du côté de la deuxième face 106. Ce revêtement réfractaire est par exemple obtenu en faisant couler du béton sur un maillage en acier non représenté, par exemple à forme de nid d'abeille comportant une pluralité d'alvéoles hexagonales solidaires les unes des autres par leurs côtés (« hex mesh » en anglais), ou autre.

Sur chaque orifice 13 du plateau 11 est monté un élément d'injection de gaz 10, ici une buse d'injection d'air.

Cet élément d'injection 10 est décrit en référence aux figures 2 et 3. Il comprend un passage 14 le traversant de part en part, d'axe X. l'élément d'injection 10 est ainsi solidarisé à la paroi support 11 de sorte que du gaz issu de la cavité 103 puisse circuler au travers de la paroi support 11 vers la deuxième face 106 de celle-ci via le passage traversant 14.

Cet élément d'injection 10 comprend en outre :
- un élément interne 20 en matériau céramique,
- un fourreau métallique creux 30, à l'intérieur duquel est logée au moins une partie de l'élément interne 20.

L'élément interne 20 comprend une surface interne 22, laquelle définit le passage traversant 14 sur toute sa longueur, et une surface externe 24. Tel que visible sur les figures 2 et 3, ces surfaces interne 22 et externe 24 sont opposées et s'étendent parallèlement à l'axe X du passage traversant 14.

Le fourreau 30 comprend une surface interne 32 et une surface externe 34. Ces surfaces interne 32 et externe 34 sont également opposées et s'étendent parallèlement à l'axe X du passage traversant 14.

La surface interne 32 du fourreau 30 et la surface externe 24 de l'élément interne 20 présentent des formes complémentaires autorisant un déplacement de l'élément interne 20 par rapport au fourreau 30 suivant une direction parallèle à l'axe X du passage traversant. Ces surfaces interne 32 du fourreau et externe 24 de l'élément interne sont par ailleurs pourvues d'éléments de fixation coopérant pour fixer de manière réversible le fourreau 30 et l'élément interne 20.

De manière générale, quel que soit le mode de réalisation et notamment la forme de la paroi support 11, ces surfaces interne 32 du fourreau et externe 24 de l'élément interne sont conformées pour autoriser un déplacement relatif du fourreau 30 et de l'élément interne 20 entre un état de fixation du fourreau et de l'élément interne, dans lequel ces éléments sont solidaires, et un état libéré de ces éléments dans lequel ils peuvent être séparés l'un de l'autre. De préférence, le passage d'un état à l'autre est obtenu par un déplacement de l'élément interne 20, le fourreau 30 restant fixe.

Dans l'exemple représenté, la surface externe 24 de l'élément interne 20 et la surface interne 32 du fourreau 30 sont des surfaces de révolution, ici cylindriques, présentant un axe de révolution confondu ou parallèle, ici confondu, avec l'axe X du passage traversant.

Dans cet exemple, on notera que l'élément interne 20 est cylindrique sur une grande partie de sa longueur (seule l'une de ses extrémités 21 présentant un rétrécissement), le fourreau 30 étant entièrement cylindrique.

On notera également que le fourreau 30 entoure l'élément interne 20 sur une partie de sa longueur seulement. L'invention n'est toutefois pas limitée par une longueur et une forme particulière du fourreau 30 et de l'élément interne 20, pourvu qu'ils puissent être solidarisés/désolidarisés l'un de l'autre.

Ainsi, de manière générale, lorsque l'élément interne 20 est logé à l'intérieur du fourreau 30, la surface externe 24 de l'élément interne 20 est en regard de la surface interne 32 du fourreau 30.

Dans l'exemple représenté, les éléments de fixation solidarisant l'élément interne 20 au fourreau 30 comprennent des ergots ou des encoches coopérant respectivement avec des rainures ou nervures de forme adaptée pour permettre de déplacer le fourreau 30 et l'élément interne 20 entre l'état de fixation et l'état libéré suite à des mouvements de translation suivant une direction parallèle à l'axe de révolution X et de rotation autour de l'axe de révolution X.

Plus précisément, dans cet exemple, le fourreau 30 présente des ergots 36 qui font saillie de sa surface interne 32 perpendiculairement à l'axe de révolution X, en direction de celui-ci (radialement). Ces ergots 36 coopèrent avec des rainures 26 ménagées dans la surface externe 24 l'élément interne 20. Ces rainures 26 ont par exemple une forme en L, dont une partie (visible figure 3) s'étend parallèlement à l'axe X depuis une extrémité 21 de l'élément interne 20, autorisant l'insertion de l'élément interne 20 à l'intérieur du fourreau 30 suivant une translation d'axe X, l'extrémité de la rainure 26 bifurquant à angle droit (Fig. 2) afin de permettre par une rotation de l'élément interne 20 par rapport au fourreau 30 et son blocage. La figure 3 représente une vue en coupe transversale de l'élément interne et du fourreau, avant rotation de l'élément interne 20 alors que la figure 2 est une représentation après rotation. Ainsi, dans la première position relative représentée figure 3, l'élément interne 20 peut être extrait du/inséré à l'intérieur du fourreau 30 par translation suivant l'axe X, les ergots 36 coulissant le long de la première partie des rainures 26 parallèle à l'axe X, à l'intérieur de ces rainures 26. Dans la deuxième position relative représentée figure 2, les ergots 36 sont dans la deuxième partie des rainures 26 qui s'étend dans un plan perpendiculaire à l'axe X : le seul mouvement possible entre le fourreau 30 et l'élément interne 20 est une rotation autour de X. Autrement dit, la coupe représentée figure 3, est une coupe selon la ligne A-A représentée figure 2 mais l'élément interne 20 représenté figure 3 est dans une position différente de celle représentée figure 2. On comprend ainsi que depuis la position représentée figure 2, il est possible de pivoter l'élément interne 20 par rapport à l'axe X afin de le mettre dans la position représentée figure 3, autorisant son extraction du fourreau 30 par translation parallèlement à l'axe X.

L'invention n'est pas limitée à ce mode de réalisation particulier : les ergots 36 pourraient faire partie de l'élément interne 20 et les rainures 26 être réalisées sur le fourreau 30. On pourrait également envisager de remplacer les ergots par des encoches coopérant non plus avec des rainures mais avec des nervures parallèles à l'axe X dont la longueur est choisie pour que la rotation des parties l'une par rapport à l'autre permette un appui de l'extrémité des nervures sur la périphérie sans encoche de l'autre partie. L'invention n'est pas non plus limitée à un nombre particulier de nervures/rainures et encoches/ergots, ces différents modes de réalisation pouvant en outre être combinés.

On notera que dans l'exemple représenté, une extrémité 33 du fourreau 30 est solidarisée à la paroi support 11 de sorte à ne pas saillir de la deuxième face 106 dudit support.

Dans l'exemple, cette extrémité 31 est insérée dans l'orifice 13 de la paroi support 11 et fixée à cette dernière par un cordon de soudure 35. La surface externe 34 du fourreau est ici soudée à la paroi support 11.

En outre, l'élément interne 20 présente une extrémité 23 pourvue d'une collerette 25, laquelle est ici en appui suivant la direction de l'axe X contre l'extrémité 33 du fourreau 30 dans l'état de fixation des deux éléments. Dans l'exemple, cette collerette 25 vient contre le revêtement 12 et affleure avec celui-ci (voir figure 2). L'invention n'est pas limitée à cette réalisation particulière, la collerette pourrait être plus grande et prendre appui sur la deuxième face 106. L'élément interne pourrait également être dépourvu de collerette 25.

On notera que, dans l'état de fixation, seul le fourreau 30 est solidarisé à la paroi support 11, de sorte que l'élément interne 20 peut facilement être remplacé, par un mouvement adéquat.

L'élément d'injection de gaz a été décrit en référence à un système de distribution d'air dans un régénérateur d'unité FCC. L'invention n'est pas limitée à ce mode de réalisation, le système de distribution de gaz pourrait également être un système de distribution de vapeur au niveau d'une zone de strippage d'un réacteur d'une unité FCC, ou tout autre élément d'injection de gaz ou vapeur d'une unité FCC.

## Revendications

1. Elément d'injection de gaz (10) pour un système de distribution de gaz (1) à l'intérieur d'une enceinte d'une unité de craquage catalytique fluide, ledit élément d'injection comprenant un passage (14) le traversant de part en part,
**caractérisé en ce qu'**il comprend :
- un élément interne (20) en matériau céramique dont une surface interne (22) définit ledit passage traversant (14) sur toute sa longueur, ledit élément interne (20) présentant une surface externe (24) opposée à ladite surface interne (22),
- un fourreau métallique creux (30) présentant une surface interne (32), à l'intérieur duquel est logée au moins une partie de l'élément interne (20), la surface interne (32) du fourreau étant en regard de la surface externe (24) de l'élément interne (20),
la surface interne (32) du fourreau et la surface externe (24) de l'élément interne (20) étant de formes complémentaires autorisant un déplacement de l'élément interne (20) par rapport au fourreau (30) suivant une direction parallèle à un axe (X) du passage traversant, lesdites surfaces interne (32) du fourreau et externe (24) de l'élément interne étant pourvues d'éléments de fixation (26, 36) coopérant pour fixer de manière réversible le fourreau et l'élément interne,
dans lequel la surface externe (24) de l'élément interne (20) et la surface interne (32) du fourreau (30) sont des surfaces de révolution, notamment cylindriques, présentant un axe de révolution confondu ou parallèle à l'axe (X) du passage traversant (14), et
les éléments de fixation comprennent des ergots (36) ou des encoches coopérant respectivement avec des rainures (26) ou nervures de forme adaptée pour autoriser le déplacement du fourreau (30) et de l'élément interne (20) entre un état de fixation dans lequel ces éléments sont solidaires et un état libéré de ces éléments dans lequel ils peuvent être séparés l'un de l'autre suite à des mouvements de translation suivant une direction parallèle à l'axe de révolution et de rotation autour de l'axe de révolution,
les rainures sont en forme de L, dont une partie s'étend parallèlement à l'axe X depuis une extrémité (21) de l'élément interne (20), autorisant l'insertion de l'élément interne (20) à l'intérieur du fourreau (30) suivant une translation d'axe X, l'extrémité de la rainure (26) bifurquant à angle droit afin de permettre une rotation de l'élément interne (20) par rapport au fourreau (30) autour de l'axe X et son blocage.

2. Elément d'injection de gaz (10) selon la revendication 1, **caractérisé en ce que** les surfaces de révolution sont cylindriques.

3. Elément d'injection de gaz (10) selon l'une quelconque des revendications 1 à 2, **caractérisé en ce que** les encoches coopèrent avec des nervures parallèles à l'axe X dont la longueur est choisie pour que la rotation des parties l'une par rapport à l'autre permette un appui de l'extrémité des nervures sur la périphérie sans encoche de l'autre partie dans l'état de fixation.

4. Elément d'injection de gaz (10) selon l'une quelconque des revendications 1 à 3, **caractérisé en ce que** le fourreau (30) est de forme cylindrique.

5. Elément d'injection de gaz (10) selon l'une quelconque des revendications 1 à 4, **caractérisé en ce que** l'élément interne (20) présente à une de ses extrémités (23) une collerette (25) en appui, dans l'état de fixation, contre une extrémité (33) du fourreau (30) suivant la direction de l'axe du passage traversant.

6. Elément d'injection de gaz (10) selon l'une quelconque des revendications 1 à 5, **caractérisé en ce que** le matériau céramique est choisi parmi le carbure de silicium SiC, le carbure de bore B₄C, le nitrure de silicium Si₃N₄, le nitrure d'aluminium AIN, le nitrure de bore BN, l'alumine Al₂O₃, ou des mélanges de ceux-ci.

7. Elément d'injection de gaz (10) selon l'une quelconque des revendications 1 à 6, **caractérisé en ce que** le matériau céramique comprend une matrice céramique choisie parmi le carbure de silicium SiC, le carbure de bore B₄C, le nitrure de silicium Si₃N₄, le nitrure d'aluminium AIN, le nitrure de bore BN, l'alumine Al₂O₃, ou des mélanges de ceux-ci, matrice céramique dans laquelle sont incorporées des fibres choisies parmi les fibres de carbone et les fibres céramiques, fibres céramiques par exemple choisies parmi les fibres d'alumine cristalline, les fibres de mullite, les fibres de carbure de silicium cristallin ou amorphe, des fibres de zircone, des fibres de silice-alumine, ou des mélanges de celles-ci.

8. Système de distribution de gaz (1) à l'intérieur d'une enceinte (100) d'une unité de craquage catalytique fluide, ledit système de distribution comprenant une paroi support (11) percée d'au moins un orifice (13) et définissant au moins une partie d'une cavité (103), la paroi support (11) ayant une première face (105) destinée à être en contact avec un gaz contenu dans cette cavité, et une deuxième face (106), opposée à la première face, **caractérisé en ce qu'**il comprend au moins un élément d'injection (10) selon l'une quelconque des revendications 1 à 7, l'élément d'injection (10) étant solidarisé à la paroi support (11), au niveau de l'orifice (13), de sorte que du gaz issu de la cavité (103) puisse circuler au travers de la paroi support (11) vers la deuxième face (106) de celle-ci via le passage (14) de l'élément interne (20) solidarisé au fourreau (30), seul le fourreau (30) étant solidarisé à la paroi support (11).

9. Système de distribution de gaz (1) selon la revendication 8 **caractérisé en ce qu'**une extrémité (33) du fourreau est solidarisée à la paroi support (11) de sorte à ne pas saillir de la deuxième face (106) de ladite paroi support.

10. Système de distribution de gaz (1) selon la revendication 8 ou 9, **caractérisé en ce qu'**une extrémité (33) du fourreau est insérée dans l'orifice (13).

## Patentansprüche

1. Gasinjektionselement (10) für ein Gasverteilungssystem (1) innerhalb eines Einschlusses einer Fluid-Catalytic-Cracking-Einheit, wobei das Injektionselement eine Passage (14), die dieses vollständig durchquert, umfasst,
**dadurch gekennzeichnet, dass** es umfasst:
- ein Innenelement (20) aus Keramikmaterial, von dem eine Innenoberfläche (22) die Passage (14) über ihre gesamte Länge definiert, wobei das Innenelement (20) eine Außenoberfläche (24) der Innenoberfläche (22) entgegengesetzt aufweist,
- eine hohle Metallhülse (30), die eine Innenoberfläche (32) aufweist, in deren Innerem mindestens ein Teil des Innenelements (20) untergebracht ist, wobei die Innenoberfläche (32) der Hülse der Außenoberfläche (24) des Innenelements (20) gegenüberliegt,
wobei die Innenoberfläche (32) der Hülse und die Außenoberfläche (24) des Innenelements (20) komplementäre Formen aufweisen, die eine Verlagerung des Innenelements (20) in Bezug zu der Hülse (30) entlang einer Richtung parallel zu einer Achse (X) der durchquerenden Passage gestatten, wobei die Innenoberfläche (32) der Hülse und die Außenoberfläche (24) des Innenelements mit Befestigungselementen (26, 36) versehen sind, die zusammenwirken, um die Hülse und das Innenelement lösbar zu befestigen,
wobei die Außenoberfläche (24) des Innenelements (20) und die Innenoberfläche (32) der Hülse (30) Rotationsoberflächen sind, die insbesondere zylindrisch sind, die eine Rotationsachse aufweisen, die mit der Achse (X) der durchquerenden Passage (14) zusammenfällt oder dazu parallel ist, und
die Befestigungselemente Ansätze (36) oder Kerben umfassen, die jeweils mit Nuten (26) oder Rippen geeigneter Form zusammenwirken, um die Verlagerung der Hülse (30) und des Innenelements (20) zwischen einem Befestigungszustand, in dem diese Elemente fest miteinander verbunden sind, und einem befreiten Zustand dieser Elemente, in dem sie voneinander im Anschluss an Translationsbewegungen entlang einer Richtung parallel zu der Rotationsachse und Drehung um die Rotationsachse voneinander getrennt werden können, zu gestatten,
die Nuten die Form eines L aufweisen, von dem sich ein Teil parallel zu der X-Achse von einem Ende (21) des Innenelements (20) erstreckt, indem das Einsetzen des Innenelements (20) in das Innere der Hülse (30) entlang einer Translation mit X-Achse gestattet wird, wobei sich das Ende der Nut (26) mit rechtem Winkel gabelt, um eine Drehung des Innenelements (20) in Bezug zu der Hülse (30) um die X-Achse und deren Blockierung zu erlauben.

2. Gasinjektionselement (10) nach Anspruch 1, **dadurch gekennzeichnet, dass** die Rotationsoberflächen zylindrisch sind.

3. Gasinjektionselement (10) nach einem der Ansprüche 1 bis 2, **dadurch gekennzeichnet, dass** die Kerben mit Rippen parallel zu der X-Achse zusammenwirken, deren Länge ausgewählt ist, damit die Drehung der Teile zueinander eine Auflage des Endes der Rippen in dem befestigten Zustand auf dem Umfang ohne Kerbe des anderen Teils erlaubt.

4. Gasinjektionselement (10) nach einem der Ansprüche 1 bis 3, **dadurch gekennzeichnet, dass** die Hülse (30) zylindrische Form aufweist.

5. Gasinjektionselement (10) nach einem der Ansprüche 1 bis 4, **dadurch gekennzeichnet, dass** das Innenelement (20) an einem seiner Enden (23) einen Kragen (25) aufweist, der in dem Befestigungszustand gegen ein Ende (33) der Hülse (30) entlang der Richtung der Achse der durchquerenden Passage anliegt.

6. Gasinjektionselement (10) nach einem der Ansprüche 1 bis 5, **dadurch gekennzeichnet, dass** das Keramikmaterial ausgewählt ist aus Siliziumkarbid SiC, Borkarbid B₄C, Siliziumnitrid Si₃N₄, Aluminiumnitrid AIN, Bornitrid BN, Aluminiumoxid Al₂O₃ oder Mischungen davon.

7. Gasinjektionselement (10) nach einem der Ansprüche 1 bis 6, **dadurch gekennzeichnet, dass** das Keramikmaterial eine Keramikmatrix, ausgewählt aus Siliziumkarbid SiC, Borkarbid B₄C, Siliziumnitrid Si₃N₄, Aluminiumnitrid AIN, Bornitrid BN, Aluminiumoxid Al₂O₃ oder Mischungen davon umfasst, Keramikmatrix, in der Fasern integriert sind, die ausgewählt sind aus Carbonfasern und Keramikfasern, Keramikfasern beispielsweise ausgewählt aus kristallinen Aluminiumoxidfasern, Mullitfasern, kristallinen oder amorphen Siliziumkarbidfasern, Zirkonoxidfasern, Siliziumdioxid-Aluminiumoxid-Fasern oder Mischungen davon.

8. Gasverteilungssystem (1) innerhalb eines Einschlusses (100) einer Fluid-Catalytic-Cracking-Einheit, wobei das Verteilungssystem eine Stützwand (11) umfasst, die mit mindestens einer Öffnung (13) durchbohrt ist, und mindestens einen Teil eines Hohlraums (103) definiert, wobei die Stützwand (11) eine erste Seite (105) aufweist, die dazu bestimmt ist, mit einem in diesem Hohlraum enthaltenen Gas in Kontakt zu sein, und eine zweite Seite (106), die der ersten Seite entgegengesetzt ist, **dadurch gekennzeichnet, dass** sie mindestens ein Injektionselement (10) nach einem der Ansprüche 1 bis 7 umfasst, wobei das Injektionselement (10) fest mit der Stützwand (11) im Bereich der Öffnung (13) derart verbunden ist, dass Gas, das aus dem Hohlraum (103) stammt, durch die Stützwand (11) zu ihrer zweiten Seite (106) über die Passage (14) des Innenelements (20), das fest mit der Hülse (30) verbunden ist, strömen kann, wobei nur die Hülse (30) fest mit der Stützwand (11) verbunden ist.

9. Gasverteilungssystem (1) nach Anspruch 8, **dadurch gekennzeichnet, dass** ein Ende (33) der Hülse fest mit der Stützwand (11) derart verbunden ist, dass es nicht von der zweiten Seite (106) der Stützwand vorsteht.

10. Gasverteilungssystem (1) nach Anspruch 8 oder 9, **dadurch gekennzeichnet, dass** ein Ende (33) der Hülse in die Öffnung (13) eingesetzt ist.

## Claims

1. Gas injection element (10) for a system (1) for distributing a gas inside an enclosure of a fluid catalytic cracking unit, said injection element comprising a through passage (14) passing all the way through it,
**characterized in that** it comprises:
- an internal element (20) of ceramic material, an inner surface (22) of which defines said through passage (14) over its entire length, said internal element (20) having an outer surface (24) opposite to said inner surface (22),
- a hollow metal sheath (30) having an inner surface (32), inside which is housed at least part of the internal element (20), the inner surface (32) of the sheath being opposite the outer surface (24) of the internal element (20),
the inner surface (32) of the sheath and the outer surface (24) of the internal element (20) having complementary shapes allowing displacement of the internal element (20) relative to the sheath (30) in a direction parallel to an axis (X) of the through passage, said inner surface (32) of the sheath and outer surface (24) of the internal element being provided with fasteners (26, 36) cooperating to reversibly fasten the sheath and the internal element,
wherein the outer surface (24) of the internal element (20) and the inner surface (32) of the sheath (30) are surfaces of revolution, in particular cylindrical, having an axis of revolution coincident with or parallel to the axis (X) of the through passage (14), and
the fastening elements comprise lugs (36) or notches cooperating respectively with grooves (26) or ribs of a suitable shape to allow the displacement of the sheath (30) and of the internal element (20) between a state of fastening in which these elements are joined together and a released state of these elements in which they can be separated from one another following translational movements in a direction parallel to the axis of revolution and rotational movements about the axis of revolution,
the grooves are in the shape of an L, part of which extends parallel to the X axis from one end (21) of the internal element (20), allowing insertion of the internal element (20) into the sheath (30) following a translation of axis X, the end of the groove (26) bifurcating at right angles to allow rotation of the internal element (20) relative to the sheath (30) about the X axis and locking thereof.

2. Gas injection element (10) according to claim 1, **characterized in that** the surfaces of revolution are cylindrical.

3. Gas injection element (10) according to either one of claims 1 to 2, **characterized in that** the notches cooperate with ribs parallel to the X axis, the length of which is chosen so that the rotation of the parts one relative to the other allows the end of the ribs to rest on the notch-free periphery of the other part in the fastened state.

4. Gas injection element (10) according to any one of claims 1 to 3, **characterized in that** the sheath (30) is cylindrical.

5. Gas injection element (10) according to any one of claims 1 to 4, **characterized in that** the internal element (20) has at one of its ends (23) a flange (25) bearing, in the fastened state, against one end (33) of the sheath (30) in the direction of the axis of the through passage.

6. Gas injection element (10) according to any one of claims 1 to 5, **characterized in that** the ceramic material is chosen from silicon carbide SiC, boron carbide B₄C, silicon nitride Si₃N₄, aluminium nitride AIN, boron nitride BN, alumina Al₂O₃, or mixtures thereof.

7. Gas injection element (10) according to any one of claims 1 to 6, **characterized in that** the ceramic material comprises a ceramic matrix chosen from silicon carbide SiC, boron carbide B₄C, silicon nitride Si₃N₄, aluminium nitride AIN, boron nitride BN, alumina Al₂O₃, or mixtures thereof, in which ceramic matrix fibres are incorporated which are chosen from carbon fibres and ceramic fibres, for example ceramic fibres chosen from crystalline alumina fibres, mullite fibres, crystalline or amorphous silicon carbide fibres, zirconia fibres, alumina-silica fibres, or mixtures thereof.

8. Gas distribution system (1) inside an enclosure (100) of a fluid catalytic cracking unit, said distribution system comprising a support wall (11) pierced with at least one orifice (13) and defining at least part of a cavity (103), the support wall (11) having a first face (105) intended to be in contact with a gas contained in this cavity, and a second face (106), opposite the first face, **characterized in that** it comprises at least one injection element (10) according to any one of claims 1 to 7, the injection element (10) being secured to the support wall (11), at the orifice (13), so that gas from the cavity (103) can flow through the support wall (11) to the second face (106) thereof via the passage (14) of the internal element (20) secured to the sheath (30), only the sheath (30) being secured to the support wall (11).

9. Gas distribution system (1) according to claim 8, **characterized in that** one end (33) of the sheath is secured to the support wall (11) so as not to project from the second face (106) of said support wall.

10. Gas distribution system (1) according to claim 8 or 9, **characterized in that** one end (33) of the sheath is inserted into the orifice (13).
